# EUROPÄISCHE PATENTSCHRIFT

(11) **EP 4 278 940 B1**
(45) Veröffentlichungstag und Bekanntmachung des Hinweises auf die Patenterteilung: **31.12.2025**
(21) Anmeldenummer: 23201753.3
(22) Anmeldetag: 10.12.2019
(51) Int. Cl.: A47L 11/40, A47L 9/28, A47L 9/00, A47L 9/16, A47L 11/24, A47L 11/30, A47L 7/04, A47L 9/30

(54) **GERÄT ZUR REINIGUNG VERSCHMUTZTER OBERFLÄCHEN**
DEVICE FOR CLEANING DIRTY SURFACES
DISPOSITIF POUR LE NETTOYAGE DES SURFACES SALES

(30) Priorität: 12.12.2018 CH 15422018
(43) Veröffentlichungstag der Anmeldung: 22.11.2023
(62) Teilanmeldung aus: 19821063.5
(73) Patentinhaber: Kemaro AG, 8360 Eschlikon (CH)
(72) Erfinder: Gadient, Martin, 8363 Bichelsee (CH); Oberholzer, Thomas, 9536 Schwarzenbach (CH); Koller, Armin, 9552 Bronschhofen (CH)
(74) Vertreter: Hepp Wenger Ryffel AG

(56) Entgegenhaltungen:
- WO-A1-2018/139865
- DE-A1- 102012 108 008
- GB-A- 2 502 132
- KR-A- 20070 021 764
- US-A1- 2016 278 593
- US-A1- 2018 299 899

## Beschreibung

Die Erfindung betrifft ein Gerät und ein Verfahren zur selbsttätigen Ausführung einer Tätigkeit, insbesondere zur Reinigung verschmutzter Oberflächen, gemäss dem Oberbegriff der unabhängigen Ansprüche.

Aus dem Stand der Technik sind verschiedene Geräte zur selbsttätigen Ausführung einer Tätigkeit bekannt, die insbesondere zur Reinigung verschmutzter Oberflächen verwendet werden. Zweck der Geräte ist es, die auszuführende Tätigkeit für den Menschen zu erleichtern. Dafür müssen die Geräte selbsttätig navigieren, Hindernisse erkennen und die auszuführende Tätigkeit selbsttätig ausführen können. Eine besondere Herausforderung ist das Vermeiden von Abstürzen über Kanten.

Aus DE 102012108008 ist ein Sauggerät bekannt, welches zur Vermeidung von Abstürzen des Geräts einen Infrarotsensor verwendet.

Nachteilig am Stand der Technik ist, dass das Gerät nicht in einer Umgebung mit Staubemissionen verwendet werden kann, da der Infrarotsensor gegenüber Staubemissionen fehleranfällig ist.

Aus der US 6580246 ist ein selbsttätiges Kehrgerät bekannt, welches bei Verschiebung des Geräterumpfes Hindernisse erkennt. Gemessen wird die Rumpfverschiebung mittels magnetischer Sensoren.

Der Nachteil hier ist, dass ein Absturz des Geräts nicht zuverlässig verhindert werden kann.

Aus US 2016/278593 A1 ist ein Reinigungsgerät bekannt, welches eine bestimmte Distanz zu einem Nutzer einhält oder welches einen gereinigten Abluftstrom abhängig vom Nutzer steuern kann.

Aus KR 2007 0021764 A ist ein Staubsaugroboter bekannt, der eine UV-Lampe zur Sterilisierung der Abluft umfasst. Die gereinigte Abluft wird genutzt, um Fremdkörper auf der zu reinigenden Fläche zu entfernen und dadurch die Reinigungsleistung zu verbessern.

In US 2018/299899 A1 wird ein Reinigungsroboter offenbart, welcher eine Kamera zur Objekterkennung sowie einen Lidar Revolver, welcher einen Laserstrahl aussendet um die Distanz zu Objekten und den Standort des Reinigungsroboters zu bestimmen.

Nachteil ist, dass das optische Erkennungssystem verschmutzt werden kann und somit eine zuverlässige Funktion nicht sichergestellt wird.

Es ist die Aufgabe der vorliegenden Erfindung, ein Gerät zur selbsttätigen Ausführung einer Tätigkeit zu schaffen, welches die Nachteile des Stands der Technik vermeidet und insbesondere ein Gerät und ein Verfahren zur selbsttätigen Ausführung einer Tätigkeit zu schaffen, so dass ein optisches Erkennungssystem insbesondere von Schmutzemissionen geschützt wird.

Diese Aufgabe wird durch ein Gerät und ein Verfahren zur selbsttätigen Ausführung einer Tätigkeit, insbesondere zur Reinigung verschmutzter Oberflächen, gemäss den unabhängigen Ansprüchen gelöst.

Erfindungsgemäss umfasst das Gerät zur selbsttätigen Ausführung einer Tätigkeit, insbesondere zur Reinigung verschmutzter Oberflächen, gemäss einem ersten Aspekt der Erfindung mindestens einen Sensor und wenigstens ein Antriebselement, wobei das Antriebselement ein Rad, aber auch eine Raupe sein kann. Das Antriebselement teilt das Gerät, bezogen auf eine bestimmungsgemässe Bewegungsrichtung, in einen hinteren Bereich und in einen vorderen Bereich. Erfindungsgemäss ist der Sensor ein mechanischer Sensor, der durch Kontakt mit dem Boden zur Feststellung einer Veränderung des Niveaus des Bodens dient und im vorderen Bereich des Geräts angeordnet ist. Damit können insbesondere Kanten festgestellt werden, so dass der Sensor als Absturzsicherung dient.

Mechanisch heisst in diesem Zusammenhang, dass die Änderung des Niveaus durch ein bewegliches Sensorelement erfasst wird. Zur Detektion einer Bewegung des Sensorelements kommen z.B. elektrische oder optische Verfahren zur Anwendung. Bevorzugt wird ein zweiteiliger magnetischer Sicherheitsschalter verwendet.

Alternativ können aber auch induktive Sensoren, kapazitive Sensoren, Beschleunigungssensoren, Ultraschallsensoren oder RFID Sensoren verwendet werden, um eine Bewegung des mechanischen Sensorelementes zu erfassen.

Durch ein Gerät mit mechanischem Sensor zur Feststellung einer Veränderung des Niveaus des Bodens kann das Gerät auch in einer Umgebung mit Schmutzemissionen verwendet werden. Die Anordnung des Sensors im vorderen Bereich des Gerätes hat den Vorteil, dass das Auslösen des Sensors einen sofortigen Stopp des Geräts zur Folge hat und Abstürze rechtzeitig verhindert werden.

Vorzugsweise ist der mechanische Sensor als Druck-, Dehnungs- oder Kraftsensor ausgebildet.

Durch die Verwendung eines mechanischen Sensors, dessen Messung mittels Druck, Dehnung oder Kraft durchgeführt wird, können Fehlmessungen gegenüber Sensoren, die anfällig bei Schmutzemissionen sind, reduziert werden.

Vorzugsweise ist der Sensor in einen Träger eines Rads, insbesondere einer Lenkrolle integriert. Er kann grundsätzlich aber in jede Art von Rad in dem vorderen Bereich integriert sein, z.B. in ein omnidirektionales Rad oder Mecanum-Rad.

Dies erlaubt eine einfache Konstruktion des Sensors. Da das Rad bereits in Bodenkontakt ist, kann auf einen zusätzlichen Mechanismus zur Herstellung des Bodenkontakts des Sensors im Bedarfsfall verzichtet werden.

Vorzugsweise ist der Sensor insbesondere im Zentrum rotierender Bürsten angeordnet.

Vorzugsweise ist der Sensor so angeordnet, dass der Schmutz bereits entfernt ist, wenn der Sensor in Kontakt mit dem Boden kommt.

Durch die Lage des Sensors ist er vor Bodenschmutz und dadurch verursachten Fehlmessungen geschützt. Ausserdem wird vermieden, dass lose Gegenstände am Boden den Sensor auslösen.

Alternativ kann mindestens ein Kontaktblech eingesetzt werden, bevorzugt zwei Kontaktbleche. Das oder die Kontaktbleche sind im vorderen Bereich, hinter einem oder mehreren Lenkrädern angeordnet. Das oder die Kontaktbleche besitzen keinen Bodenkontakt, solange die Lenkräder in Kontakt mit dem Boden sind. Bei abrupter Veränderung des Niveaus des Bodens verlieren die Lenkrollen Kontakt mit dem Boden und es wird zwischen einem oder beiden Kontaktblechen und dem Boden ein Kontakt hergestellt. Dadurch kann ein Signal erzeugt werden und damit ein Absturz verhindert werden.

Gemäss einem weiteren Aspekt umfasst ein Gerät zur selbsttätigen Reinigung verschmutzter Oberflächen mindestens eine Reinigungsvorrichtung. Die Reinigungsvorrichtung umfasst eine Entleerungsvorrichtung, die einen Schmutzaufnahmeraum zum Aufnehmen des aufgesammelten Schmutzes umfasst. Die Entleerungsvorrichtung ist zwischen einer Betriebsposition, in der sie Schmutz von der Reinigungsvorrichtung aufnimmt, und einer Entleerposition, in der sie Schmutz aus dem Schmutzaufnahmeraum entleert, selbsttätig beweglich. Die Entleerungsvorrichtung kann über einen internen oder einen externen Antrieb selbsttätig bewegt werden.

Zur Betätigung mit einem externen Antrieb kann das Gerät mit einer Kupplung versehen sein, an welche der externe Antrieb ankoppelbar ist.

Alternativ ist es auch denkbar, die Entleerungsvorrichtung in Wirkverbindung mit einer externen Rückhalteanordnung zu bringen. Durch gezielte Bewegung des Geräts bei zurückgehaltener Entleerungsvorrichtung lässt sich die Entleerungsvorrichtung von der Betriebsposition in die Entleerposition bringen.

Dadurch kann das Gerät selbsttätig und ohne manuelle Unterstützung den aufgesammelten Schmutz entleeren und stellt neuen Füllraum zum weiteren Aufsammeln von Schmutz bereit. Lange Standzeiten werden vermieden, um ein effizientes und schnelles Reinigen zu gewährleisten. Ausserdem ermöglicht die selbsttätige Entleerung des Geräts eine höhere Autonomie und es wird kein Personal benötigt. Es ist denkbar, dass der Schmutzbehälter bei Bedarf auch manuell entleert werden kann.

Vorzugsweise umfasst das Gerät einen Schmutzaufnahmeraum und ein am Gerät beweglich angeordnetes Verschlusselement. Das Verschlusselement kann kippbar, aufklappbar und/oder ausziehbar sein.

Das beweglich angeordnete Verschlusselement erlaubt es, den Schmutzaufnahmeraum selbsttätig und ohne manuelle Unterstützung zu öffnen.

Vorzugsweise umfasst die Entleerungsvorrichtung einen Füllstandsensor zur Bestimmung eines Restvolumens.

Das erlaubt eine einfache Bestimmung des noch vorhandenen Schmutzaufnahmevolumens des Schmutzaufnahmeraums.

Gemäss einem weiteren Aspekt, umfasst ein Gerät zur selbsttätigen Reinigung verschmutzter Oberflächen mindestens eine Reinigungsvorrichtung und eine Blasvorrichtung zum Erzeugen eines Luftstroms. Die Blasvorrichtung kann durch eine Absaugvorrichtung zum Absaugen von Luft gebildet sein. In diesem Fall weist die Absaugvorrichtung bevorzugt eine Filteranordnung zum Filtern von Partikeln aus der abgesaugten Luft auf. Das Gerät umfasst ausserdem ein optisches Erkennungssystem, bevorzugt mit einem Bilderkennungssystem, z.B. zur Erkennung von Hindernissen. Eine Luftführung der Blasvorrichtung und insbesondere eine Abluftführung der Filteranordnung ist derart angeordnet, dass Luft und bevorzugt gefilterte Abluft an einer Erkennungseinheit des optischen Erkennungssystems vorbeigeführt wird. Die Erkennungseinheit ist typischerweise einer Kamera, kann aber auch eine Laserdistanzmesseinheit oder ein IR Sensor sein.

Dadurch wird Schmutz aus einem Bereich vor der optischen Erkennungseinheit weggeführt und das schmutzempfindliche Bilderkennungssystem vor Schmutzemissionen geschützt und eine daraus resultierende Fehleranfälligkeit reduziert.

Vorzugsweise umfasst die vorstehende Reinigungsvorrichtung in allen Aspekten eine Kehrvorrichtung.

Dadurch kann eine Kehrvorrichtung zur Reinigung verschmutzter Oberflächen in einer Umgebung mit Schmutzemissionen mit Hilfe eines Bilderkennungssystems navigiert werden.

Gemäss einem weiteren Aspekt umfasst das Gerät zur selbsttätigen Ausführung einer Tätigkeit mindestens eine Reinigungsvorrichtung und eine aktivierbare Transporthilfe. Die Transporthilfe kann einen ausziehbaren Griff aufweisen, der an einem Ende des Geräts befestigt ist. Am gegenüberliegenden Ende ist wenigstens ein Rad angeordnet. Dabei kann es sich um ein Transportrad handeln, das nur im Transportfall in Bodenkontakt gelangt oder aber auch ein Antriebsrad, welches auskuppelbar ist oder keine Selbsthemmung aufweist. Wird das Gerät in eine Transportposition gebracht, so ist das Rad bereits in Kontakt mit dem Boden oder tritt mit dem Boden in Kontakt. Das beschriebene Prinzip ähnelt dem eines handelsüblichen Koffertrolleys mit zwei Rädern. In Transportposition sind die beiden Räder in Kontakt mit dem Boden und ermöglichen eine vereinfachte und leichte manuelle Bewegung des Geräts in Art eines Koffertrolleys.

Dadurch kann das Gerät einfach manuell fortbewegt werden.

Alternativ ist die Transporthilfe durch eine am Gehäuse angeordnete, ausziehbare Leine gebildet. Das Gerät weist dann mindestens drei mit dem Boden in Kontakt stehende Räder auf, welche auskoppelbar sind oder keine Selbsthemmung aufweisen. Die Räder sind bevorzugt so angeordnet, dass mindestens ein Rad an einem Ende des Geräts und wenigstens zwei Räder am gegenüberliegenden Ende angeordnet sind und in Kontakt mit dem Boden sind.

Die Aufgabe wird weiter durch ein Verfahren zur selbsttätigen Reinigung verschmutzter Oberflächen mittels eines Geräts gelöst. Das Verfahren umfasst die Schritte:
- Messen eines vorgegebenen Sollwerts eines Restvolumens in einem Schmutzaufnahmeraum
- wenn der Sollwert erreicht ist, Bewegen des Geräts in eine einem Schmutzauffangbereich benachbarte Position
- Selbsttätiges Öffnen des beweglichen Schmutzaufnahmeraums
- Entleeren des Schmutzes aus dem Schmutzaufnahmeraum in den Schmutzauffangbereich.

Der Sollwert kann dabei beispielsweise eine vorbestimmte Füllhöhe, ein Füllgewicht und/oder ein Zeitpunkt sein.

Vorteil dieses Verfahrens ist ein autonomer Betrieb und ein selbsttätiges, effizientes und schnelles Erkennen des Gerätes, wann sich das Gerät zum Schmutzaufnahmebereich bewegen soll.

Die Aufgabe wird weiter durch ein Verfahren zur selbsttätigen Reinigung verschmutzter Oberflächen mittels eines Geräts gelöst. Das Verfahren umfasst die Schritte:
- Erkennung einer Veränderung des Niveaus in einem in Bewegungsrichtung vor einem Antriebselement liegenden Bereich des Bodens durch Kontakt eines Sensors mit dem Boden
- wenn keine Veränderung des Niveaus des Bodens erkannt wird, Fortsetzung eines Reinigungsvorgangs
- wenn eine Veränderung des Niveaus des Bodens erkannt wird, Beenden der Fortbewegung des Geräts und optionales Absetzen eines Signals und/oder Durchführung einer Richtungsänderung.

Vorteil dieses Verfahrens ist ein selbsttätiges, effizientes bzw. schnelles Erkennen einer Änderung des Niveaus des Bodens, um Abstürze und/oder Beschädigungen des Geräts zu verhindern. Ein abzusetzendes Signal kann ein optisches Signal, ein Hörsignal oder eine drahtlose Fehlermeldung, via Funk, Mail oder SMS sein.

Die Aufgabe wird weiter durch ein Verfahren zur selbsttätigen Reinigung verschmutzter Oberflächen mittels eines Geräts gelöst. Das Verfahren umfasst die Schritte:
- Lokalisierung eines Bildes, welches räumlich einer Station zugeordnet ist, mittels eines Bilderkennungssystems
- Bestimmen der relativen Lage des Geräts bezogen auf die Station mittels einer 3D Kamera in Echtzeit, durch Messung wenigstens einer Distanz zum lokalisierten Bild
- Bewegung des Geräts zur Station auf der Grundlage der bestimmten relativen Lage.

Das Verfahren umfasst weiter bevorzugt die Schritte:
- Ermitteln eines durch das Bild gegebenen Codes
- Ausführen einer dem Code zugeordneten Aktion

Alternativ kann die Kamera zu Erfassung und Auswertung eines 3D-Codes ausgebildet sein.

Vorteile dieses Verfahrens sind die genaue Bestimmung der IstPosition des Geräts und die Durchführung einer Aktion bei Erkennung eines Codes.

Vorzugsweise umfasst das Verfahren zur selbsttätigen Reinigung verschmutzter Oberflächen mittels eines Geräts folgende Schritte:
- wenn ein Sollwert nicht einem Sollkriterium entspricht, Fortsetzung eines Reinigungsvorgangs
- Bewegung des Geräts, wenn der Sollwert dem Sollkriterium entspricht, insbesondere zu einer Ladestation oder zu einer Schmutzaufnahmestation im Schmutzauffangbereich
- wenn die Station erreicht ist, Ausführung eines Befehls, insbesondere das Andocken und Aufladen bis zur Erreichung der maximalen Ladekapazität oder Leeren des Schmutzaufnahmeraums.

Ein Sollkriterium kann ein Ladezustand, eine Füllhöhe oder ein Füllgewicht des Schmutzauffangbehälters sein.

Vorteil dieses Verfahrens ist das selbsttätige Bewegen zu einer Station bei Erreichen eines vorbestimmten Sollkriteriums. Eine Station können beispielsweise eine Ladestation oder der Schmutzaufnahmebereich sein.

Die Aufgabe wird weiter durch ein Verfahren zur selbsttätigen Reinigung verschmutzter Oberflächen mittels eines Geräts gelöst. Das Verfahren umfasst die Schritte:
- Erzeugen eines Luftstroms, insbesondere durch Absaugen von Luft durch eine Absaugvorrichtung
- optional, Filtern eines Abluftstroms der Absaugvorrichtung durch eine Filteranordnung
- Entfernung von Schmutz aus einem Bereich benachbart zu einem optischen Erkennungssystem, insbesondere einer Kamera, durch Vorbeiführung des Luftstroms, insbesondere des gefilterten Abluftstroms.

Alternativ zu einer Absaugvorrichtung kann ein Luftgebläse oder auch eine Druckluftquelle verwendet werden.

Mit einem derartigen Verfahren können optische Sensoren, die gegenüber Schmutzemissionen empfindlich sind, in einer Umgebung mit Schmutzemissionen verwendet werden. Schmutz wird aus dem Bereich benachbart zum optischen Erkennungssystem wegtransportiert, bevor er sich z.B. auf einer Linse ablagern kann oder bereits abgelagerter Schmutz kann gegebenenfalls auch entfernt werden.

Die Erfindung wird im Folgenden anhand von Ausführungsbeispielen in Figuren weiter erläutert. Hierbei zeigen:
- Figur 1:: Seitenansicht eines Geräts in einer ersten Ausführungsform,
- Figur 2:: Perspektivische Darstellung der in Figur 1 gezeigten Ausführungsform des Geräts,
- Figur 3:: Unteransicht der in Figur 1 gezeigten Ausführungsform des Geräts,
- Figur 4a:: Seitenansicht der in Figur 1 gezeigten Ausführungsform des Geräts in Betriebsposition bei Veränderung des Niveaus des Bodens,
- Figur 4b:: Schema einer Klappvorrichtung des Geräts bei Veränderung des Niveaus des Bodens,
- Figur 5:: Seitenansicht der in Figur 1 gezeigten Ausführungsform des Geräts in Entleerungsposition,
- Figur 6:: Seitenansicht der in Figur 1 gezeigten Ausführungsform des Geräts in Betriebsposition mit ausgezogenem Griff,
- Figur 7:: Seitenansicht der in Figur 1 gezeigten Ausführungsform des Geräts in Betriebsposition mit ausgezogenem Griff und ohne Schmutzaufnahmeraum,
- Figur 8:: Seitenansicht der in Figur 1 gezeigten Ausführungsform des Geräts in Transportposition mit ausgezogenem Griff,
- Figur 9:: Darstellung einer Abluftführung angeordnet an einem optischen Erkennungssystem.
- Figur 10:: Schematische Darstellung der Steuerung des Geräts.
- Figur 11:: Schematische Darstellung des Lokalisierungssystems des Geräts.

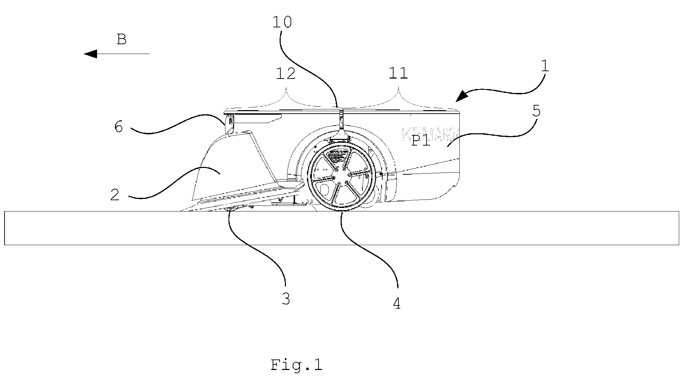

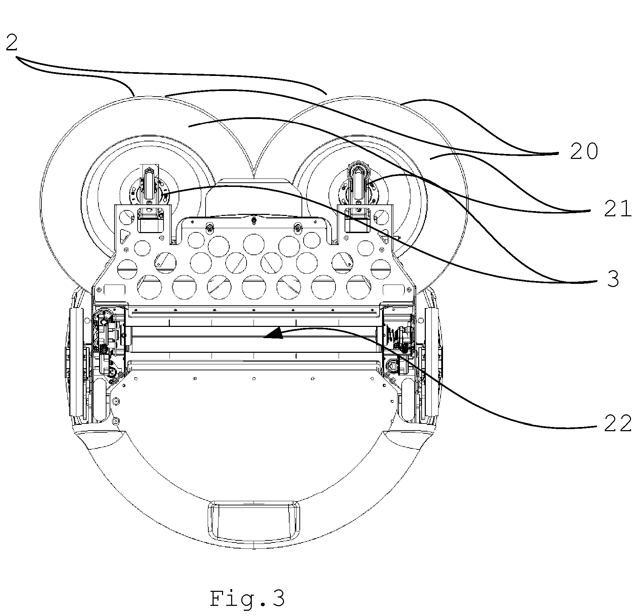

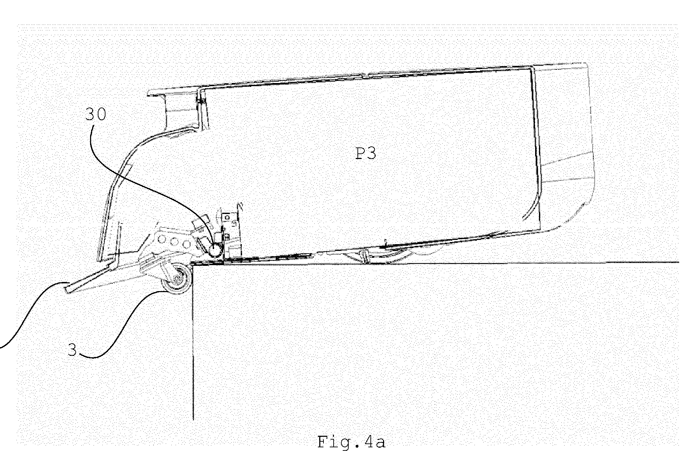

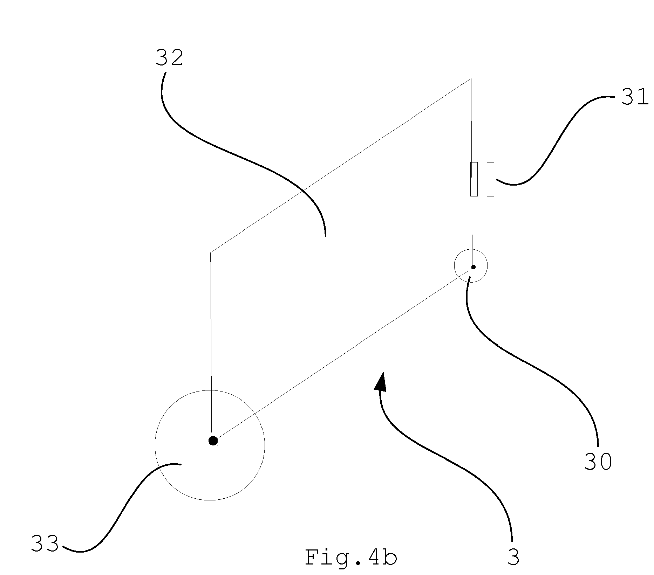

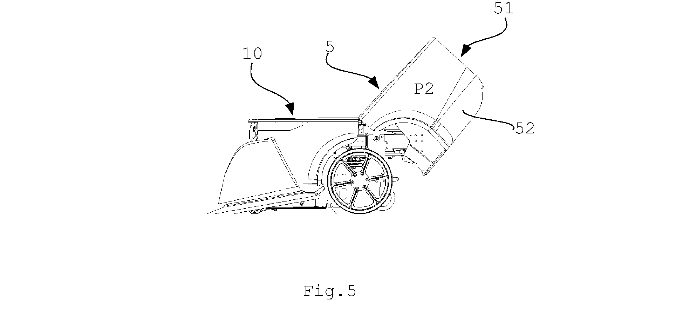

Ein in Figur 1 dargestelltes Gerät 1 dient zur selbsttätigen Reinigung in einer industriellen Umgebung mit Schmutzemissionen. Das Gerät 1 enthält ein Gehäuse 10, das durch zwei Antriebsräder 4 in Bewegungsrichtung B gesehen in einen vorderen Bereich 12 und einen hinteren Bereich 11 unterteilt ist. Im vorderen Bereich 12 befindet sich, von dem Gehäuse 10 abgedeckt, eine Reinigungsvorrichtung 2. Die Reinigungsvorrichtung 2 enthält zwei nebeneinander liegende rotierende Bürsten 20 (siehe Fig.3). Hinter einem vorderen Rand der rotierenden Bürsten 20 ist in Bewegungsrichtung B im vorderen Bereich 12 je ein Sensor 3 in Form einer Klappvorrichtung angeordnet (siehe Fig.3/4). Zudem befindet sich im vorderen Bereich 12 ein optisches Erkennungssystem 6. Der hintere Bereich 11 umfasst eine Entleerungsvorrichtung 5 und einen Schmutzaufnahmeraum 51 (siehe Fig.5). In Figur 1 ist die Entleerungsvorrichtung 5 in einer Betriebsposition P1 gezeigt.

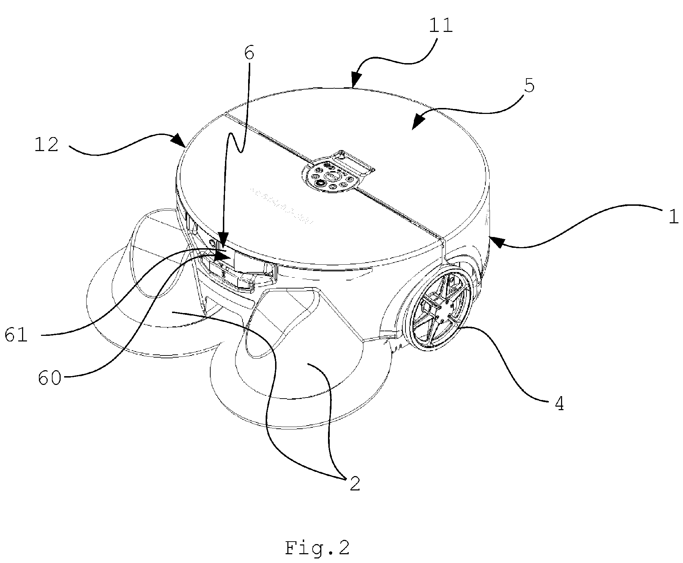

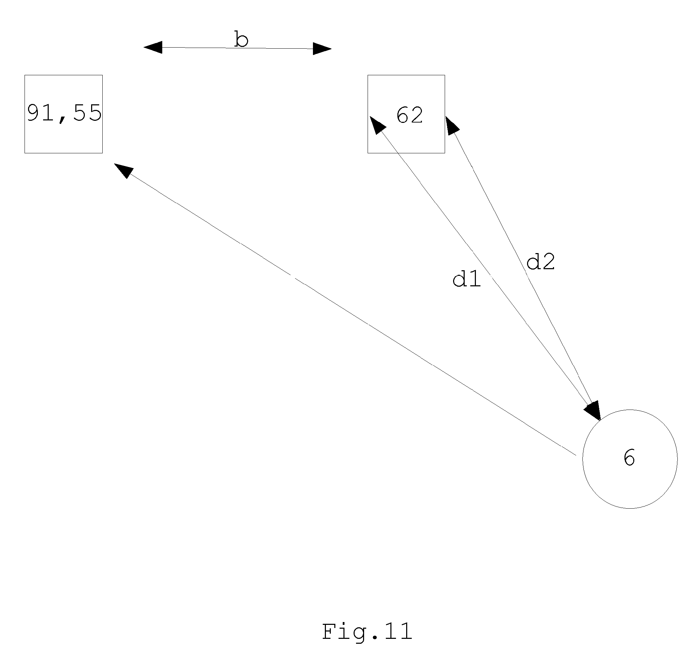

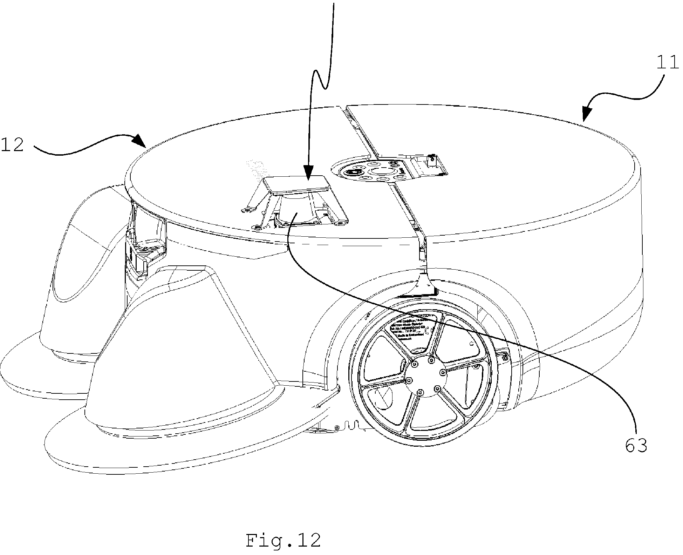

Figur 2 zeigt im vorderen Bereich 12 über der Reinigungsvorrichtung 2 eine Kamera 60 des optischen Erkennungssystems 6, welches zur Bestimmung der Lage des Geräts 1 dient. Die Kamera 60 weist eine Linse 61 auf. Das optische Erkennungssystem 6 lokalisiert z. B. ein sich im Raum befindliches Bild (siehe auch Fig.11). Bei Erkennung des Bildes kann eine relative Lage des Geräts 1 über eine Messung von zwei Distanzen d1,d2 zum Bild an je einem Rand des Bildes ermittelt werden (siehe Fig. 11). Zusätzlich ist dem Bild ein Code zugeordnet, der bei Erkennung durch das optische Erkennungssystem 6 zur Ausführung einer durch den Code festgelegten Aktion des Geräts 1 führt. Nach Bestimmung der relativen Lage bewegt sich das Gerät 1 selbsttätig an eine relativ zum Standort des Codes bestimmte Position. Alternativ oder zusätzlich wird auf Basis der ermittelten Daten eine Aktion ausgeführt.

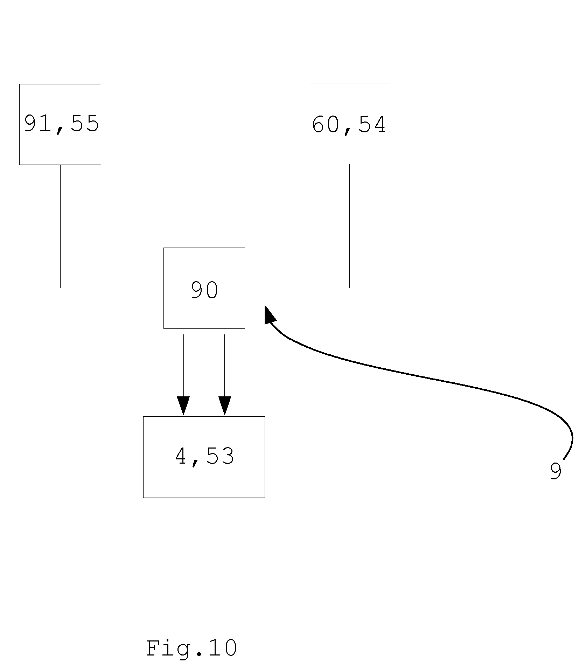

Beispiele für die Position eines Bildes kann eine Ladestation 91 oder eine Schmutzaufnahmestation 55 zur Entleerung des Schmutzaufnahmeraums 51 sein (siehe Fig. 10).

Eine Rechnereinheit 90 des Geräts kann (siehe Fig.10) ein oder mehrere Sollkriterien umfassen. Solange ein Sollwert nicht dem Sollkriterium entspricht, wird der Reinigungsvorgang des Geräts 1 fortgesetzt. Entspricht der Sollwert hingegen dem Sollkriterium, so führt das Gerät 1 die dafür vorgesehene Aktion aus. Dies kann beispielsweise ein Anfahren der Ladestation 91 sein, um die Batterie aufzuladen oder ein Anfahren der Schmutzaufnahmestation 55, um den Schmutzaufnahmeraum 51 zu entleeren.

Figuren 3, 4a und 4b zeigen in der Unter- und Seitenansicht des Geräts 1 die Reinigungsvorrichtung 2 und die beiden Klappvorrichtungen 3. Die Reinigungsvorrichtung 2 umfasst zwei rotierende Rundbürsten 20 mit je einem Bürstenteller 21. Beide Rundbürsten 20 sind nebeneinander liegend, im vorderen Bereich 12 des Geräts 1 angeordnet. Die beiden Klappvorrichtungen 3 sind innerhalb der Peripherie der Bürsten 20, bevorzugt exzentrisch zu den Bürstentellern 21 angeordnet und je um eine Achse schwenkbar (siehe Fig. 4b). Die in Fig. 4b schematisch dargestellte Klappvorrichtung 3 umfasst je eine Achse 30, eine Kontaktstelle 31, und eine Lenkrolle mit einen Träger 32 und einem Rad 33. An der Achse 30 ist der Träger 32 mit dem Rad 33 schwenkbar angeordnet. Solange sich der Träger 32 in einer Normalposition befindet, ist die Kontaktstelle 31 mit einem am Träger 32 angeordneten Kontakt geschlossen. Wenn keine Veränderung des Niveaus des Bodens vorliegt, wird der Reinigungsprozess durch das Gerät 1 fortgesetzt. Bei Veränderung des Niveaus des Bodens schwenkt der Träger 32 nach unten und es wird die elektrische Kontaktstelle 31 geöffnet. Das Gerät 1 stoppt und sendet bevorzugt ein Signal und/oder ändert seine Fortbewegungsrichtung, um der Änderung des Niveaus des Bodens auszuweichen. Figur 4a zeigt das Gerät 1 in einer Stopp-Position P3, bei der eine Veränderung des Niveaus des Bodens vorliegt und die Klappvorrichtung 3 nach unten geklappt ist.

Die beiden Klappvorrichtungen 3 können unabhängig voneinander ausgelöst werden. Je nach dem, in welchem Winkel das Gerät 1 zur Veränderung des Niveaus des Bodens steht, können eine oder beide Klappvorrichtungen 3 nach unten geklappt sein.

Figur 5 zeigt die Entleerungsvorrichtung 5 des Geräts 1. Die Entleerungsvorrichtung 5 umfasst den Schmutzaufnahmeraum 51, ein Verschlusselement 52, einen Füllstandsensor 54 (siehe Fig.10) und einen internen Antrieb 53 (siehe Fig.10). Das Verschlusselement 52 kann durch den Antrieb 53 selbsttätig bewegt werden, beispielsweise durch Verschwenken. Das Verschlusselement 52 kann zwei Positionen einnehmen, entweder eine geöffnete oder eine geschlossene Position.

Fig. 5 zeigt das Gerät 1 in einer Entleerposition P2, wobei das Verschlusselement 52 in geöffneter Position vorliegt. Eine Entleerung wird mit Hilfe einer Steuerung 9 (siehe Fig. 10) durchgeführt. Die Steuerung 9 umfasst die Rechnereinheit 90 und den Füllstandsensor 54. Der Füllstandsensor 54 bestimmt das Restvolumen des Schmutzaufnahmeraums 51. Die Rechnereinheit 90 gleicht das vom Füllstandsensor 54 bestimmte Restvolumen mit einem vorgegebenen Sollwert ab. Der Füllstandsensor 54 ist beispielsweise ein Ultraschallsensor, der berührungslos und schmutzunempfindlich ist. Alternativ ist aber auch ein Tastsensor denkbar. Ebenfalls ist es denkbar, den Füllstand via Gewicht oder aufgrund des Fahrverhaltens des Geräts 1 durch Beschleunigungsmessung zu ermitteln. Entspricht das Restvolumen dem vorgegebenen Sollwert, so aktiviert die Rechnereinheit 90 das Antriebselement 4 des Geräts 1. Das Gerät 1 bewegt sich dann in eine benachbarte Position zu einem Schmutzauffangbereich der Schmutzaufnahmestation 55. Das Erreichen der benachbarten Position des Schmutzauffangbereiches wird von dem optischen Erkennungssystem 6 (siehe Fig.2) mit Hilfe der Kamera 60 erkannt. Dies wiederum aktiviert über die Rechnereinheit 90 den Antrieb 53, welcher selbsttätig das Verschlusselement 52 öffnet. Der mit Schmutz befüllte Schmutzaufnahmeraum 51 wird in den Schmutzauffangbereich der Schmutzaufnahmestation 55 entleert.

Der Schmutzauffangbereich kann ein dedizierter Behälter oder auch einfach ein Loch im Boden sein.

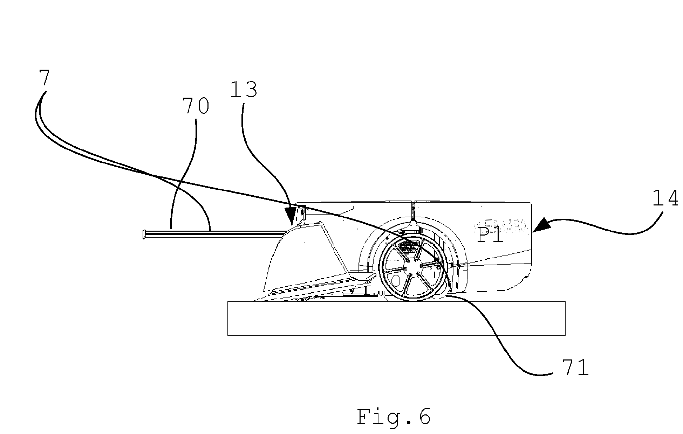

Die Figuren 6-8 zeigen, wie ein manueller Transport des Geräts 1 durchgeführt wird.

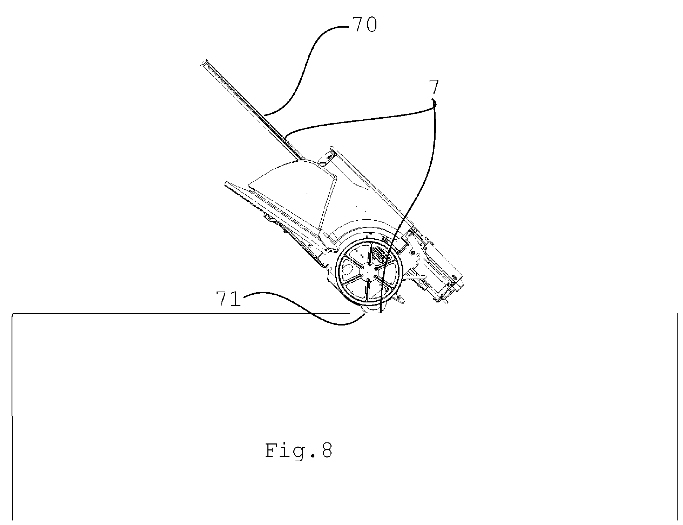

Figur 6 zeigt eine Transportvorrichtung 7 des Geräts 1. Das Gerät 1 ist in einer Betriebsposition P1 mit einem ausgezogenen Griff 70 dargestellt. Der Griff 70 ist an einem Ende 13 des Geräts 1 angeordnet. An einem gegenüberliegenden Ende 14 ist mindestens ein Rad 71 angeordnet, welches in Betriebsposition P1 nicht in Kontakt mit dem Boden ist. Um das Gerät zu transportieren, wird es in eine Transportposition gebracht (siehe Fig. 8).

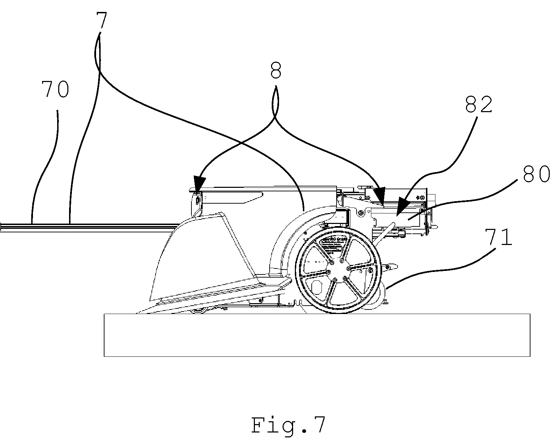

In Figur 7 ist das Gerät 1 ohne den Schmutzaufnahmeraum 51 (siehe Fig.5) in Betriebsposition P1 mit dem ausgezogenen Griff 70 dargestellt. Der Schmutzaufnahmeraum 51 oder Teile davon werden entfernt, damit das Gerät in die Transportposition (siehe Fig. 8) gebracht werden kann.

Eine Abdeckung des Schmutzaufnahmeraums oder der ganze Schmutzaufnahmeraum 51 kann mit Hilfe einer Haltevorrichtung (z.B. durch einen Rastmechanismus oder durch einen Magneten) an dem Griff 70 oder dem Gehäuse 10 (siehe Fig.1) befestigt werden (nicht gezeigt).

In Figur 8 wird gezeigt, wie in Abwesenheit des Schmutzaufnahmeraums 51 und durch Anheben des Griffs 7 das Rad 71 in Kontakt mit dem Boden gebracht wird. Ein manuelles Transportieren des Geräts 1 ist möglich.

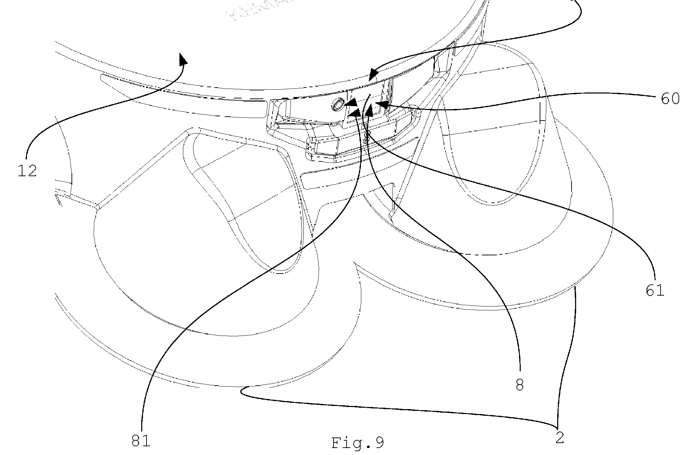

Figur 9 zeigt eine Abluftführung 8 zur Entfernung von Schmutz aus dem Bereich benachbart zu der Linse 61 der Erkennungseinheit 60. Dabei handelt es sich typischerweise um eine Kamera des optischen Erkennungssystems 6.

Durch die Abluftführung 8 geführte Luft wird durch eine Absaugvorrichtung 82 (siehe Fig.7) erzeugt. Diese ist mit einer Filteranordnung 80 versehen. Die Absaugvorrichtung 82 und die Filteranordnung 80 sind im hinteren Bereich 11 des Geräts 1 angeordnet. Das optische Erkennungssystem 6 ist im vorderen Bereich des Geräts 1 angeordnet.

Die Abluftführung 8 ist so angeordnet, dass Abluft 81 welche von der Absaugvorrichtung 82 erzeugt wird, zum optischen Erkennungssystem 6 in den vorderen Bereich 12 des Geräts 1 geleitet wird und über die Oberfläche der Linse 61 der Kamera 60 strömt (siehe Pfeile in Fig.9).

Figur 10 zeigt das Schema der wesentlichen Komponenten der Steuerung 9 des Geräts 1. Die Steuerung 9 umfasst die Rechnereinheit 90, den Füllstandsensor 54 oder die Kamera 60, das Antriebselement 4 oder den internen oder externen Antrieb 53. die Steuerung dient zum Anfahren der Schmutzaufnahmestation 55 oder der Ladestation 91 und zum Ausführen von Aktionen bei Erreichen dieser Stationen. Der Füllstandsensor 54 oder die Kamera 60 detektieren ein Sollkriterium. Dieses wird mit Hilfe der Rechnereinheit 90 mit einem vorgegebenen Sollwert verglichen. Stimmen das Sollkriterium und der Sollwert überein, wird das Antriebselement 4 oder der interne oder externe Antrieb 53 aktiviert und es erfolgt die Bewegung des Geräts 1 zur Schmutzaufnahmestation 55 oder der Ladestation 91. Erreicht das Gerät 1 die Schmutzaufnahmestation 55 oder die Ladestation 91, wird die jeweilige Aktion z.B. Laden, Entleeren durchgeführt.

Figur 11 zeigt ein System zur Lokalisierung des Geräts 1. Das Lokalisierungssystem umfasst eine Signaltafel 62, das optische Erkennungssystem 6 und die Rechnereinheit 90 (siehe Fig.10). Das System dient insbesondere zur Lokalisierung des Geräts bezogen auf die Schmutzaufnahmestation 55 oder die Ladestation 91. Das optische Erkennungssystem 6 erkennt die Signaltafel 62, welche beispielsweise ein Bild und/oder einen Code enthalten kann. Die Rechnereinheit 90 bestimmt aufgrund der Abstände d1, d2 eine Distanz zur Signaltafel 62, um die relative Position zur Signaltafel 62 zu bestimmen. Auf Grundlage der relativen Lage steuert das Gerät 1 die Schmutzaufnahmestation 55 oder die Ladestation 91 an und führt eine durch die durch das Bild oder den Code definierte Aktion durch.

## Patentansprüche

1. Gerät (1) zur selbsttätigen Reinigung verschmutzter Oberflächen, umfassend mindestens eine Reinigungsvorrichtung (2), wobei
das Gerät (1) eine Blasvorrichtung zum Erzeugen eines Luftstroms,
sowie ein optisches Erkennungssystem (6), bevorzugt ein Bilderkennungssystem, besonders bevorzugt ein LIDAR Sensor zur Erkennung von Hindernissen umfasst,
**dadurch gekennzeichnet, dass** eine Luftführung der Blasvorrichtung derart angeordnet ist, dass Luft (81) am optischen Erkennungssystem (6) vorbeiführbar ist.

2. Gerät (1) nach Anspruch 1, wobei die Blasvorrichtung durch eine Absaugvorrichtung (82) zum Absaugen von Luft gebildet ist, wobei die Absaugvorrichtung (82) eine Filteranordnung (80) zum Filtern von Partikeln aus der abgesaugten Luft aufweist und wobei die Luftführung eine Abluftführung (8) der Filteranordnung ist.

3. Verfahren zur selbsttätigen Reinigung verschmutzter Oberflächen mittels eines Geräts (1), umfassend die Schritte:
- Erzeugen eines Luftstroms
- Entfernung des Staubs aus einem Bereich benachbart zu einem optischen Erkennungssystem (6) des Geräts durch Vorbeiführung des Luftstroms.

4. Verfahren nach Anspruch 3, wobei der Luftstrom ein Abluftstrom (81) sein kann, wobei der Abluftstrom (81) durch Absaugen von Luft durch eine Absaugvorrichtung (82) erzeugt wird und wobei der Abluftstrom (81) durch eine Filteranordnung (80) gefiltert wird.

5. Gerät (1) nach Anspruch 1, **dadurch gekennzeichnet, dass** das Gerät (1) eine Entleerungsvorrichtung (5), umfassend einen Schmutzaufnahmeraum (51), zum Aufnehmen des aufgesammelten Schmutzes umfasst, wobei die Entleerungsvorrichtung (5) zwischen einer Betriebsposition (P1), in der Schmutz von der Reinigungsvorrichtung (2) aufnehmbar ist und einer Entleerposition (P2), in der Schmutz entleerbar ist, selbsttätig beweglich ist.

6. Gerät nach Anspruch 5, **dadurch gekennzeichnet, dass** der Schmutzaufnahmeraum (51) ein beweglich am Gerät (1) angeordnetes Verschlusselement (52) aufweist.

7. Gerät nach einem der Ansprüche 5 oder 6, **dadurch gekennzeichnet, dass** die Entleerungsvorrichtung (5) einen Füllstandsensor (54) zur Bestimmung eines Restvolumens umfasst.

8. Gerät nach einem der Ansprüche 1 bis 7, **dadurch gekennzeichnet, dass** die Reinigungsvorrichtung (2) eine Kehrvorrichtung umfasst.

9. Verfahren nach Anspruch 3, umfassend die Schritte:
- Lokalisierung eines Bildes (62), welches räumlich einer Station (55;91) zugeordnet ist, mittels eines LIDAR Sensors oder eines Bilderkennungssystems
- Bestimmen der relativen Lage des Geräts (1) bezogen auf das Bild (62) mittels LIDAR Sensor oder einer 3D Kamera in Echtzeit, durch Messung wenigstens einer Distanz zum lokalisierten Bild (62)
- Bewegung des Geräts (1) zur Station auf der Grundlage der bestimmten relativen Lage
enthaltend bevorzugt die weiteren Schritte:
- Ermitteln eines durch das Bild (62) gegebenen Codes
- Ausführen einer dem Code zugeordneten Aktion.

10. Verfahren nach einem der Anspruch 9, umfassend die Schritte:
- wenn ein Sollwert nicht einem Sollkriterium entspricht, Fortsetzung eines Reinigungsvorgangs
- Bewegung des Geräts (1), wenn der Sollwert dem Sollkriterium entspricht, insbesondere der Ladestation (91) oder des Schmutzauffangbereichs
- wenn die Station erreicht ist, Ausführung eines Befehls, insbesondere das Andocken und Aufladen bis zur Erreichung der maximalen Ladekapazität oder Leeren des Schmutzaufnahmeraums (51).

11. Gerät (1) nach einem der Ansprüche 1 oder 5 bis 8, umfassend mindestens einen Sensor (3) zur Verhinderung eines Absturzes und wenigstens ein Antriebselement (4), wobei das Antriebselement (4) einen hinteren Bereich (11) und einen vorderen Bereich (12) des Geräts (1), bezogen auf eine bestimmungsgemässe Bewegungsrichtung (B) definiert,
**dadurch gekennzeichnet, dass** der Sensor (3) ein mechanischer Sensor ist und zur Feststellung einer Veränderung des Niveaus (N) des Bodens durch Kontakt mit dem Boden ausgebildet ist und im vorderen Bereich (12) angeordnet ist.

12. Gerät nach Anspruch 11, **dadurch gekennzeichnet, dass** der Sensor (3) zur Messung mittels Druck, Dehnung oder Kraft ausgebildet ist.

13. Gerät nach einem der vorangehenden Ansprüche 11 oder 12, **dadurch gekennzeichnet, dass** der Sensor (3) in einen Träger eines Rads, insbesondere in eine Lenkrolle (32, 33) integriert ausgebildet ist.

14. Gerät nach einem der vorangehenden Ansprüche 11 bis 13, **dadurch gekennzeichnet, dass** der Sensor (3) räumlich im Bereich von Bürsten angeordnet ist.

15. Gerät nach einem der vorangehenden Ansprüche 13 oder 14, **dadurch gekennzeichnet, dass** der Sensor (3) in klappbare Lenkrollen (32, 33) integriert ausgebildet ist.

## Claims

1. Device (1) for automatically cleaning dirty surfaces, comprising at least one sweeping apparatus (2), wherein
the device (1) comprises a blowing apparatus for generating an airstream,
as well as an optical detection system (6), preferably an image detection system, particularly preferably a LIDAR sensor for detecting obstacles,
**characterized in that** an air guide of the blower apparatus is arranged in such a way that air (81) can be guided past the optical detection system (6).

2. Device (1) according to claim 1, wherein the blowing apparatus is formed by a suction apparatus (82) for suctioning air, wherein the suction apparatus (82) has a filter arrangement (80) for filtering particles from the suctioned air, and wherein the air guide is an exhaust air guide (8) of the filter arrangement.

3. Method for automatically cleaning dirty surfaces by means of a device (1), comprising the steps:
- generating an air flow,
- removing the dust from an area adjacent to an optical detection system (6) of the device by guiding the air flow past.

4. Method according to claim 3, wherein the air flow may be an exhaust air flow (81), wherein the exhaust air flow (81) is generated by exhausting air through a suction apparatus (82), and wherein the exhaust air flow (81) is filtered through a filter arrangement (80).

5. Device (1) according to claim 1, **characterized in that** the device (1) has a emptying apparatus (5) comprising a dirt receptacle space (51) for receiving the collected dirt, wherein the emptying apparatus (5) can move automatically between an operating position (P1) in which dirt can be received from the cleaning apparatus (2), and an emptying position (P2) in which dirt can be emptied.

6. Device according to claim 5, **characterized in that** the dirt receptacle space (51) has a closure element (52) which is movable arranged on the device (1).

7. Device according to one of claims 5 or 6, **characterized in that** the emptying apparatus (5) comprises a filling level sensor (54) for determining a residual volume.

8. Device according to one of claims 1 to 7, **characterized in that** the cleaning apparatus (2) comprises a sweeping apparatus.

9. Method according to claim 3, comprising the steps:
- determining the location of an image (62) which is assigned spatially to a station (55; 91), by means of a LIDAR sensor or an image detection system,
- determining the relative position of the device (1) with respect to the image (62) by means of LIDAR sensor or a 3D camera in real time, by measuring at least one distance from the image (62) whose location has been determined, and
- moving the device (1) to the station on the basis of the determined relative position
preferably containing the further steps:
- determining a code provided by the image (62), and
- performing an action which is assigned to the code.

10. Method according to one of claim 9, comprising the steps:
- if a setpoint value does not correspond to a setpoint criterion, continuing a cleaning process,
- moving the device (1) if the setpoint value corresponds to the setpoint criterion, in particular of the charging station (91) or of the dirt collection area, and
- if the station is reached, executing a command, in particular docking and charging until the maximum charging capacity is reached or emptying the dirt receptacle space (51).

11. Device (1) according to one of claims 1 or 5 to 8, comprising at least one sensor (3) for preventing a fall and at least one drive element (4), wherein the drive element (4) is defined by a rear region (11) and a front region (12) of the device (1) defined with respect to a direction of movement (B) intended for the device,
**characterized in that** the sensor (3) is a mechanical sensor and is designed to detect a change in the level (N) of the floor through contact with the ground and is arranged in the front region (12).

12. Device according to claim 11, **characterized in that** the sensor (3) is designed to measure by means of pressure, extension, or force.

13. Device according to one of the preceding claims 11 or 12, **characterized in that** the sensor (3) is integrated into a carrier of a wheel, in particular into a caster (32, 33).

14. Device according to one of the preceding claims 11 to 13, **characterized in that** the sensor (3) is spatially arranged in the region of brushes.

15. Device according to one of the preceding claims 13 or 14, **characterized in that** the sensor (3) is integrated into foldable casters (32, 33).

## Revendications

1. Appareil (1) pour le nettoyage automatique de surfaces sales, comprenant au moins un dispositif de nettoyage (2),
l'appareil (1) comprenant un dispositif de soufflage pour générer un flux d'air,
ainsi qu'un système de détection optique (6), de préférence un système de reconnaissance d'images, de préférence encore un capteur LIDAR pour la détection d'obstacles,
**caractérisé en ce qu'**un conduit d'air du dispositif de soufflage est disposé de telle sorte que l'air (81) puisse passer devant le système de détection optique (6).

2. Appareil (1) selon la revendication 1, dans lequel l'appareil de soufflage est constitué d'un appareil d'aspiration (82) pour aspirer de l'air, l'appareil d'aspiration (82) comportant un dispositif de filtrage (80) pour filtrer les particules de l'air aspiré, et le conduit d'air étant un conduit d'évacuation d'air (8) du dispositif de filtrage.

3. Procédé de nettoyage automatique de surfaces sales au moyen d'un appareil (1), comprenant les étapes suivantes:
- génération d'un flux d'air
- élimination de la poussière d'une zone adjacente à un système de détection optique (6) de l'appareil par passage du flux d'air.

4. Procédé selon la revendication 3, dans lequel le flux d'air peut être un flux d'air évacué (81), le flux d'air évacué (81) étant généré par aspiration d'air à travers un dispositif d'aspiration (82) et le flux d'air évacué (81) étant filtré à travers un dispositif de filtrage (80).

5. Appareil (1) selon la revendication 1, **caractérisé en ce que** l'appareil (1) comprend un appareil de vidange (5) comprenant un espace de réception des saletés (51) pour recevoir les saletés collectées, l'appareil de vidange (5) étant mobile automatiquement entre une position de fonctionnement (P1) dans laquelle les saletés peuvent être collectées par le dispositif de nettoyage (2) et une position de vidage (P2) dans laquelle les saletés peuvent être vidées.

6. Appareil selon la revendication 5, **caractérisé en ce que** l'espace de réception des salissures (51) comporte un élément de fermeture (52) disposé de manière mobile sur l'appareil (1).

7. Appareil selon l'une des revendications 5 ou 6, **caractérisé en ce que** l'appareil de vidange (5) comprend un capteur de niveau (54) pour déterminer un volume résiduel.

8. Appareil selon l'une des revendications 1 à 7, **caractérisé en ce que** l'appareil de nettoyage (2) comprend un dispositif de balayage.

9. Procédé selon la revendication 3, comprenant les étapes suivantes:
- localisation d'une image (62) qui est attribuée spatialement à une station (55 ; 91) au moyen d'un capteur LIDAR ou d'un système de reconnaissance d'images
- détermination de la position relative de l'appareil (1) par rapport à l'image (62) au moyen d'un capteur LIDAR ou d'une caméra 3D en temps réel, par mesure d'au moins une distance par rapport à l'image localisée (62)
- déplacement de l'appareil (1) vers la station sur la base de la position relative déterminée.
comprenant de préférence les étapes supplémentaires suivantes:
- détermination d'un code donné par l'image (62)
- exécution d'une action associée au code.

10. Procédé selon l'une des revendications 9, comprenant les étapes suivantes:
- si une valeur de consigne ne correspond pas à un critère de consigne, poursuite d'un processus de nettoyage
- déplacement de l'appareil (1), lorsque la valeur de consigne correspond au critère de consigne, en particulier de la station de charge (91) ou de la zone de collecte des saletés
- lorsque la station est atteinte, exécution d'une commande, en particulier l'amarrage et la charge jusqu'à atteindre la capacité de charge maximale ou le vidage de l'espace de collecte des saletés (51).

11. Appareil (1) selon l'une des revendications 1 ou 5 à 8, comprenant au moins un capteur (3) pour empêcher une chute et au moins un élément d'entraînement (4), l'élément d'entraînement (4) étant défini par rapport à une direction de déplacement (B) conforme à l'usage prévu, définies par rapport à une direction de mouvement (B) conforme à l'usage prévu,
**caractérisé en ce que** le capteur (3) est un capteur mécanique et est conçu pour détecter une modification du niveau (N) du sol par contact avec le sol et est disposé dans la zone avant (12).

12. Appareil selon la revendication 11, **caractérisé en ce que** le capteur (3) est conçu pour effectuer des mesures au moyen de la pression, de la déformation ou de la force.

13. Appareil selon l'une des revendications 11 ou 12 précédentes, **caractérisé en ce que** le capteur (3) est intégré dans un support d'une roue, en particulier dans un galet de direction (32, 33).

14. Appareil selon l'une des revendications 11 à 13 précédentes, **caractérisé en ce que** le capteur (3) est disposé spatialement dans la zone des brosses.

15. Appareil selon l'une des revendications 13 ou 14 précédentes, **caractérisé en ce que** le capteur (3) est intégré dans des roulettes pivotantes rabattables (32, 33).
